# FASCICULE DE BREVET EUROPEEN

(11) **EP 0 893 374 B1**
(45) Date de publication et mention de la délivrance du brevet: **17.11.2004**
(21) Numéro de dépôt: 98401400.1
(22) Date de dépôt: 10.06.1998
(51) Int. Cl.: B65G 37/00, B65G 17/12

(54) **Mécanisme d'espacement et transfert de produits en continu à trois chaines**
Vorrichtung zur Beabstandung und Übergabe von Produkten, die kontinuierlich mit drei Ketten arbeitet
Spacer- and transfer mechanism for products, working continuously with three chains

(30) Priorité: 13.06.1997 FR 9707363
(43) Date de publication de la demande: 27.01.1999
(73) Titulaire: ARIES PACKAGING S.A., F-10450 Breviandes (FR)
(72) Inventeur: De Guglielmo, Pascal, 10300 Montgueux (FR); Cartier, Alain, 10190 Fontvannes (FR)
(74) Mandataire: Derambure, Christian

(56) Documents cités:
- EP-A- 0 126 553
- DE-A- 3 805 114
- DE-A- 3 821 287
- US-A- 5 143 204

## Description

L'invention se rapporte à un mécanisme d'espacement et de transfert de produits, en continu.

Un tel mécanisme peut, par exemple, être incorporé dans une machine d'emballage de bouteilles, de pots, ou autres récipients de sections ronde, ovale, rectangulaire ou polygonale.

Le document EP-A-126 553 décrit un mécanisme de convoyage pour machine d'emballage dans lequel des articles sont acheminés sur une trajectoire d'alimentation et convoyés par des éléments d'espacement montés sur un ensemble de chaînes sans fin, ces chaînes comprenant une chaîne supérieure et une chaîne inférieure alignées l'une par rapport à l'autre mais décalées dans le sens de la trajectoire d'alimentation.

Le document EP-A-450 915 décrit un mécanisme de convoyage pour machine d'emballage dans lequel des articles sont transportés le long d'un trajet d'alimentation et formés en groupe en vue de l'emballage consécutif, ce mécanisme comprenant des éléments d'espacement montés sur une chaîne sans fin.

D'autres mécanismes d'espacement et de convoyage de produits sont décrits dans les documents suivants : FR-A-2 052 128, FR-A-2 243 894, GB-A-926 776, GB-A-974 995, DE-A-38 39 498, CH-A-520 023, EP-A-60 720, EP-A-709 913, EP-A-708 028, US-A-3 454 142, US-A-3 092 234, US-A-4 757 893, WO-A-87 06170.

Le document DE-A-38 05 114 décrit une machine à emboîter des livres avec un transporteur à chaîne sans fin garantissant le positionnement et l'alignement d'une lame de pliage au moyen d'une chaîne de commande.

Les mécanismes d'espacement et de transfert de produits en continu de l'art antérieur présentent un certain nombre d'inconvénients.

Les mécanismes comportent conventionnellement des éléments d'espacement montés sur une ou deux chaînes sans fin, les modes de fixation de ces éléments d'espacement sur la ou les deux chaînes sans fin mobiles ne permettant pas d'assurer un positionnement prédéfini et stable de ces éléments lorsque le mécanisme de convoyage est en fonctionnement, en particulier à grande cadence.

Le manque de rigidité de la fixation des éléments d'espacement sur la ou les deux chaînes peut permettre des mouvements, par exemple de flexion, incontrôlés, des éléments d'espacement entraînés par la ou les deux chaînes.

Ces mouvements intempestifs, incontrôlables, peuvent avoir de graves conséquences sur les produits convoyés qui ne sont alors plus groupés et peuvent éventuellement être endommagés.

Ce phénomène limite la cadence maximale admissible des mécanismes d'espacement et de transfert de l'art antérieur.

Lorsque ces mécanismes comportent des éléments d'espacement montés sur deux chaînes, les éléments d'espacement sont conventionnellement disposés entre un plan supérieur défini par la chaîne haute et un plan inférieur défini par la chaîne basse.

De sorte que, lorsque des petits objets tels que des pots de yaourt ou équivalent doivent être groupés et transportés, la partie supérieure de ces objets tel que le couvercle des pots, est disposée dans un plan qui peut être placé plus bas que le plan supérieur défini par la chaîne haute.

De tels mécanismes ne permettent donc pas alors un accès libre pour un ou des outils placés au-dessus des objets convoyés, ce qui complique nécessairement la mise en oeuvre de ces outils.

L'invention se rapporte à un mécanisme de transfert et d'espacement d'articles ne présentant pas les inconvénients des mécanismes connus de l'art antérieur.

A cette fin, l'invention se rapporte à un mécanisme de transfert et d'espacement en continu, ce mécanisme comportant une pluralité d'éléments d'espacement et de transport, mobiles selon un circuit comprenant au moins une section sensiblement rectiligne, ce mécanisme comprenant en outre un premier organe de guidage et d'entraînement tel qu'une chaîne sans fin haute, un deuxième organe de guidage et d'entraînement tel qu'une chaîne sans fin basse, chaque élément d'espacement et de transport étant associé aux premier et deuxième organes de guidage et d'entraînement par l'intermédiaire de supports, ce mécanisme comportant un troisième organe de guidage et d'entraînement tel qu'une chaîne sans fin, chaque élément de transport et d'espacement étant associé au troisième organe de guidage et d'entraînement par l'intermédiaire d'un levier, chaque support comportant une partie centrale et deux parties extrêmes opposées, la face interne et des chanfreins du support étant sensiblement en contact avec un bloc de guidage comportant des gorges dans lesquelles sont logés les moyens de guidage et d'entraînement.

Chaque levier est monté mobile en rotation par rapport au troisième organe de guidage selon un axe sensiblement vertical et situé à une première partie extrême du levier, le levier étant en outre monté mobile en rotation selon un axe sensiblement vertical de chaque support associé, cet axe étant situé à la seconde partie extrême du levier.

Dans un mode de réalisation, le premier et le deuxième organe de guidage sont des chaînes ou des bandes sans fin, placées en regard et l'une au-dessus de l'autre entre une tête de commande comportant une poulie de renvoi de la chaîne sans fin haute, coaxiale à une poulie de renvoi de la chaîne sans fin basse, la tête de retour comportant une poulie de renvoi de la chaîne sans fin haute, coaxiale à une poulie de renvoi de la chaîne sans fin basse.

Dans un mode de réalisation, le troisième organe de guidage et d'entraînement est une chaîne ou une bande sans fin placée en regard et au dessous des premier et deuxième organe de guidage et d'entraînement, entre deux poulies de renvoi d'axe sensiblement verticaux.

L'axe de la tête de retour est écarté d'une distance L de l'axe d'une première poulie de renvoi du troisième organe de guidage et d'entraînement, cette distance L étant égale à la distance séparant l'axe de la tête de commande avec l'axe de la seconde poulie de renvoi du troisième organe de guidage et d'entraînement.

La distance L est sensiblement égale à la distance séparant les axes de rotation du levier.

Les chaînes sans fin haute et basse définissent un circuit de déplacement des supports comprenant deux sections sensiblement rectilignes et parallèles et deux sections extrêmes latérales courbes.

La chaîne sans fin formant troisième organe de guidage et d'entraînement est comprise dans une gorge du bâti du mécanisme, cette gorge comprenant deux sections sensiblement rectilignes et parallèles et deux sections extrêmes latérales courbes.

D'autres objets et avantages de l'invention apparaîtront au cours de la description suivante, description qui va être faite en se référant aux dessins annexés dans lesquels :
- la figure 1 est une vue schématique en perspective d'un mécanisme de transfert et d'espacement de produits en continu, selon un mode de réalisation de l'invention ;
- la figure 2 est une vue schématique de détail, en perspective des organes de guidage et d'entraînement des éléments d'espacement et de convoyage du mécanisme représenté en figure 1 ;

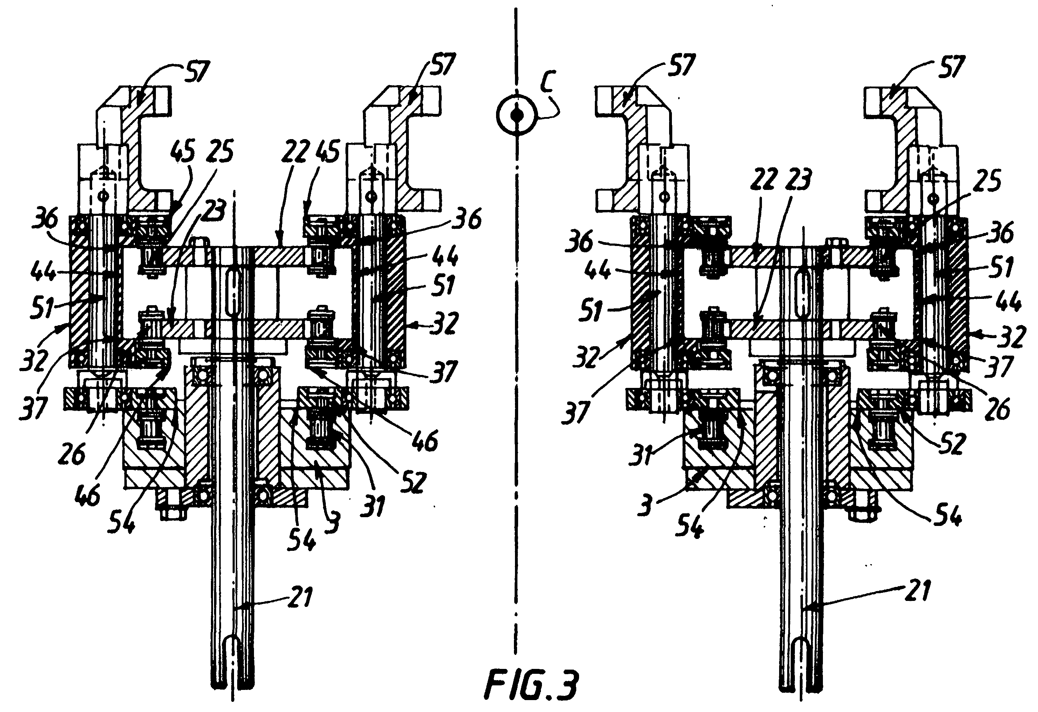

- la figure 3 est une coupe correspondant au plan III-III de la figure 1 ;

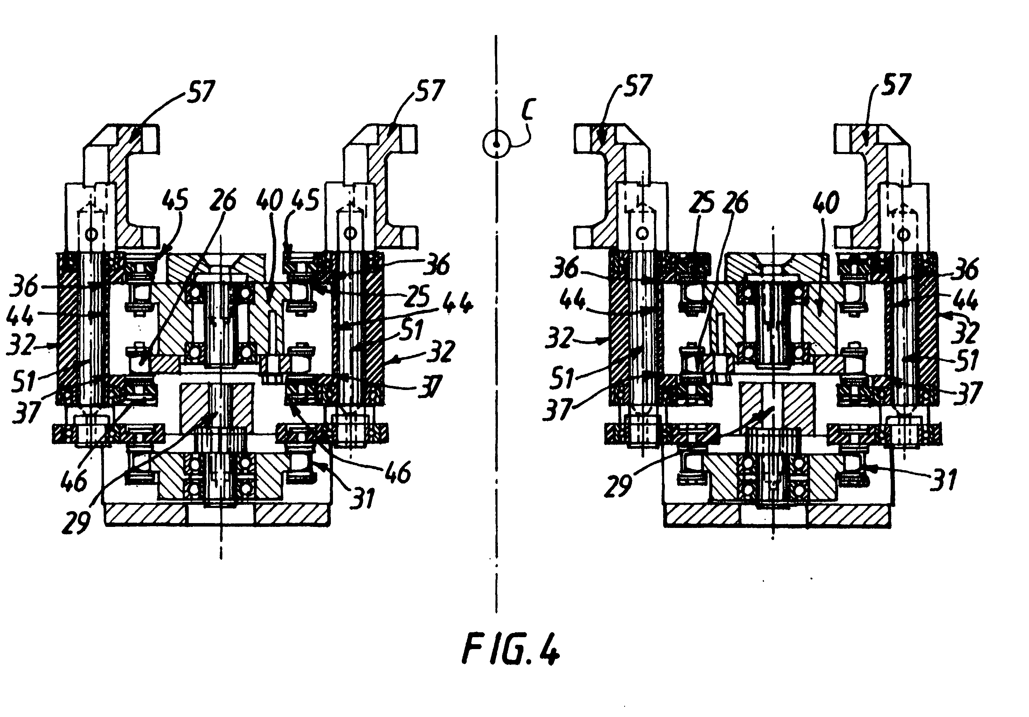

- la figure 4 est une coupe correspondant au plan IV-IV de la figure 1 ;
- la figure 5 est une coupe correspondant au plan V-V de la figure 1 ;
- les figures 6, 7 et 8 représentent trois étapes successives du dégagement d'une empreinte par rapport à des produits à grouper et à transporter.

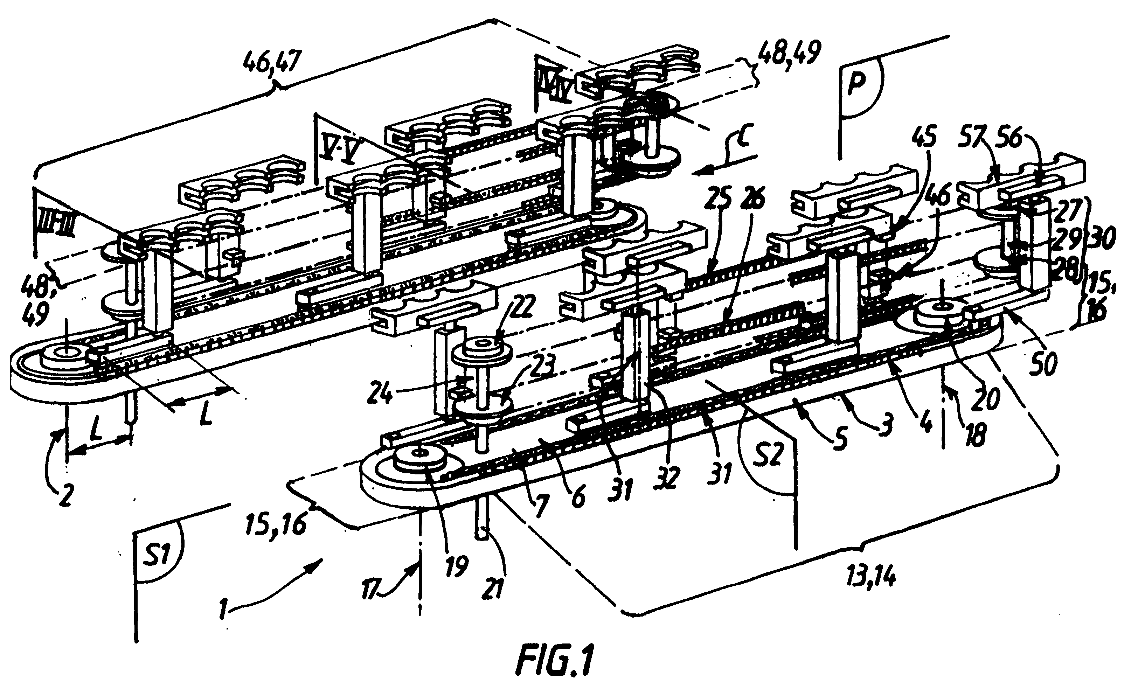

Le mécanisme représenté en figure 1 comprend deux ensembles 1, 2 placés en regard et symétriques l'un de l'autre par rapport à un plan P sensiblement vertical, disposé entre les ensembles 1 et 2.

Seul l'ensemble 1 sera tout d'abord présenté, son association éventuelle avec l'ensemble 2 faisant l'objet d'une description ultérieure.

L'ensemble 1 comprend un bâti 3 sensiblement horizontal. Ce bâti 3 comporte, sur toute sa longueur périphérique, une gorge 4.

Cette gorge 4 est ouverte au moins sur la face supérieure du bâti 3.

Cette gorge 4 est limitée, vers l'extérieur du bâti 3, par la paroi latérale externe sensiblement verticale 5 du bâti 3.

Cette gorge 4 est limitée, vers l'intérieur du bâti 3, par une paroi périphérique latérale interne 6 sensiblement verticale, limitant une partie centrale 7 du bâti 3.

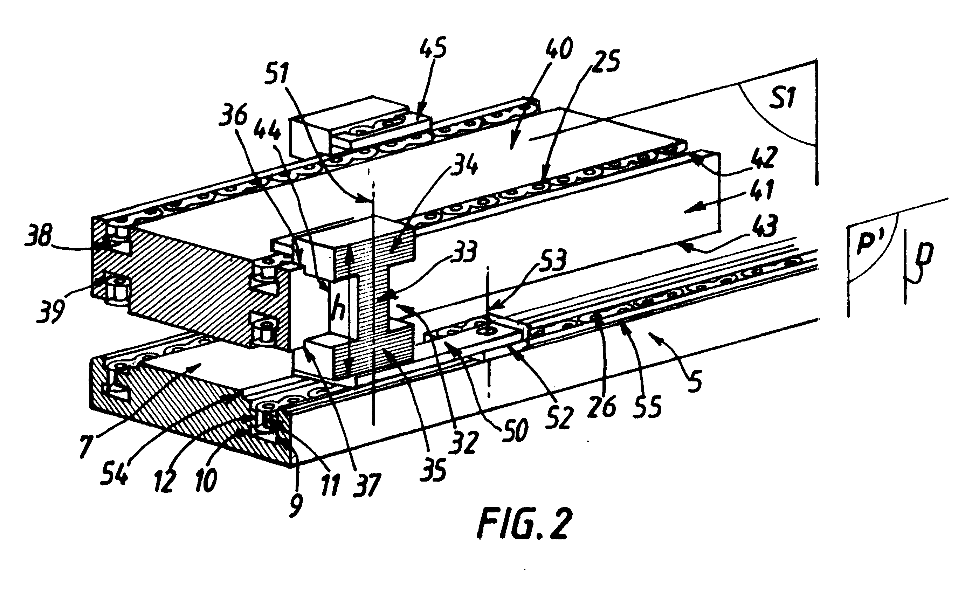

Cette gorge 4 comporte en outre deux parois latérales 9, 10, symétriques l'une de l'autre par rapport à un plan P' sensiblement vertical et parallèle au plan P (voir figure 2).

Chaque paroi latérale 9, 10 comporte un bossage 11, 12 formant surfaces de guidage et d'appui à une chaîne sans fin ou tout autre moyen d'entraînement équivalent.

La distance séparant les parois latérales 9, 10 est sensiblement constante sur toute la circonférence du bâti 3, de sorte que la largeur de la gorge 4 est sensiblement constante.

De même, la profondeur de la gorge 4, mesurée suivant une direction D, du plan P' est sensiblement constante sur toute la circonférence du bâti 3.

La gorge 4 s'étend suivant deux sections sensiblement rectilignes et parallèles 13, 14, raccordées à leurs extrémités par deux sections courbes sensiblement en arc de cercle 15, 16.

Le bâti 3 présente une symétrie par rapport à un plan S1, sensiblement vertical et situé à mi-distance des sections 13, 14 de la gorge 4.

Le bâti 3 présente également une symétrie par rapport à un plan S2, sensiblement vertical et perpendiculaire au plan S1, situé à mi-distance des sections courbes 15, 16 de la gorge 4.

Le bâti 3 est sensiblement rigide. Il peut être métallique ou bien réalisé en polymère, en composite ou tout autre matériau équivalent.

Dans un mode de réalisation, le bâti 3 est, au moins pour les parois de la gorge 4, en polyamide haute densité ou tout autre polymère résistant à l'usure par frottement, facilement usinable et présentant une absorption d'humidité faible et de faibles coefficients de dilatation en atmosphère humide.

Le bâti 3 supporte, au voisinage de chacune des sections courbes 15, 16 de la gorge 4, des axes 17, 18 de poulies de renvoi 19, 20.

Ces poulies de renvoi 19, 20 sont sensiblement identiques et disposées sensiblement symétriquement par rapport au plan S2.

Ces poulies 19, 20 sont disposées sur le côté supérieur du bâti 3.

Le bâti 3 supporte également un axe 21, sensiblement vertical, et parallèle aux axes 17, 18.

Cet axe 21 supporte deux poulies de renvoi de chaînes sans fin ou tout autre moyen d'entraînement équivalent.

Dans le mode de réalisation représenté, deux poulies 22, 23 d'une tête de commande 24 permettent le renvoi de deux chaînes 25, 26. Les chaînes 25, 26 s'étendent dans deux plans sensiblement parallèles et horizontaux, la chaîne sans fin haute 25 étant placée en regard de la chaîne sans fin basse 26.

Deux poulies de renvoi 27, 28, analogues aux poulies de renvoi 22, 23 sont supportées par un axe 29 d'une tête de retour 30, cette tête de retour étant fixée sur une structure solidaire du bâti 3, non représentée.

La poulie de renvoi 22 de la chaîne sans fin haute 25 est donc coaxiale à la poulie de renvoi 23 de la chaîne sans fin basse 26.

De même, la poulie de renvoi 27 de la chaîne sans fin haute 25 est coaxiale à la poulie de renvoi 28 de la chaîne sans fin basse 26.

De sorte que les chaînes sans fin 25, 26 sont placées sensiblement en regard l'une de l'autre, sur toute leur longueur.

Le mécanisme selon l'invention peut comporter plus de deux chaînes entre une tête de commande 24 et une tête de retour 30.

Dans le mode de réalisation représenté en figure 1, l'axe 17 de la poulie 19 n'est pas relié par une transmission à l'axe 21 de la tête de commande 24.

Dans un autre mode de réalisation, non représenté, une transmission à courroie crantée, à engrenage ou équivalent, est disposée entre le axes 17 et 21, de sorte que le mouvement de rotation des poulies 22, 23 de la tête de commande est associé au mouvement de rotation de la poulie de renvoi 19.

L'axe 21 peut être relié, par un mécanisme non représenté, à une source motrice externe.

L'ensemble poulies 22, 23, axe 21, axe 19, chaînes sans fin 25, 26, poulies 27, 28, axe 29 d'une part et l'ensemble formé par les poulies de renvoi 19, 20 d'une chaîne sans fin 31 contenue dans la gorge 4 peuvent être ainsi animés d'un mouvement synchrone.

Sur les chaînes 25, 26 sont fixés des supports 32.

Ces supports se présentent, dans le mode de réalisation de la figure 1, sous une forme générale parallélépipédique, de section transversale, sensiblement carrée.

La figure 2 représente un autre mode de réalisation de ces supports 32.

Les supports 32 représentés en figure 2 comportent une partie centrale parallélépipédique 33, s'étendant sensiblement verticalement et deux parties extrêmes 34, 35, opposées, de forme générale parallélépipédique.

La partie extrême 34 haute comporte un chanfrein 36.

De même, la partie extrême basse 35 des supports 32 comporte un chanfrein 37.

Les chaîne 25, 26 sont contenues dans des gorges 38, 39, de section comparable à celle de la gorge 4.

Ces gorges 38, 39 sont ménagées dans un bloc de guidage 40, sensiblement rigide.

Ce bloc 40 peut être métallique ou bien réalisé en polymère, en composite, ou tout autre matériau équivalent.

Dans un mode de réalisation, le bloc de guidage 40 est, au moins pour les parois des gorges 38, 39, réalisé en polyamide haute densité ou tout autre polymère résistant à l'usure par frottement, facilement usinable et présentant une absorption d'humidité faible et de faibles coefficients de dilatation en atmosphère humide.

Dans ce cas, les supports 32 seront de préférence métalliques.

Le bloc de guidage 40 présente, tout comme le bâti 3, une symétrie par rapport à un plan S1 vertical équidistant des gorges 38, 39.

Ce bloc de guidage 40 présente une surface latérale 41, sensiblement verticale et deux surfaces sensiblement horizontales respectivement haute et basse 42, 43.

Chaque support 32 vient au contact, au moins partiellement, avec la surface latérale 41 et le pourtour des surfaces horizontales 42, 43 du bloc de guidage 40.

Plus précisément, ainsi qu'il est représenté en figure 2, les deux faces du chanfrein 36 de la partie extrême haute 34 de chaque support 32 sont en contact avec la zone latérale du bloc 40 formée par l'intersection de la surface latérale 41 avec la surface horizontale haute 42.

De même, les deux faces du chanfrein 37 de la partie extrême basse 35 de chaque support 32 sont en contact avec la zone latérale du bloc 40 formée par l'intersection de la surface latérale 41 avec la surface horizontale basse 43.

La face interne 44 de la partie centrale 33 de chaque support 32 peut, de plus, être en contact avec la surface latérale 41 du bloc 40.

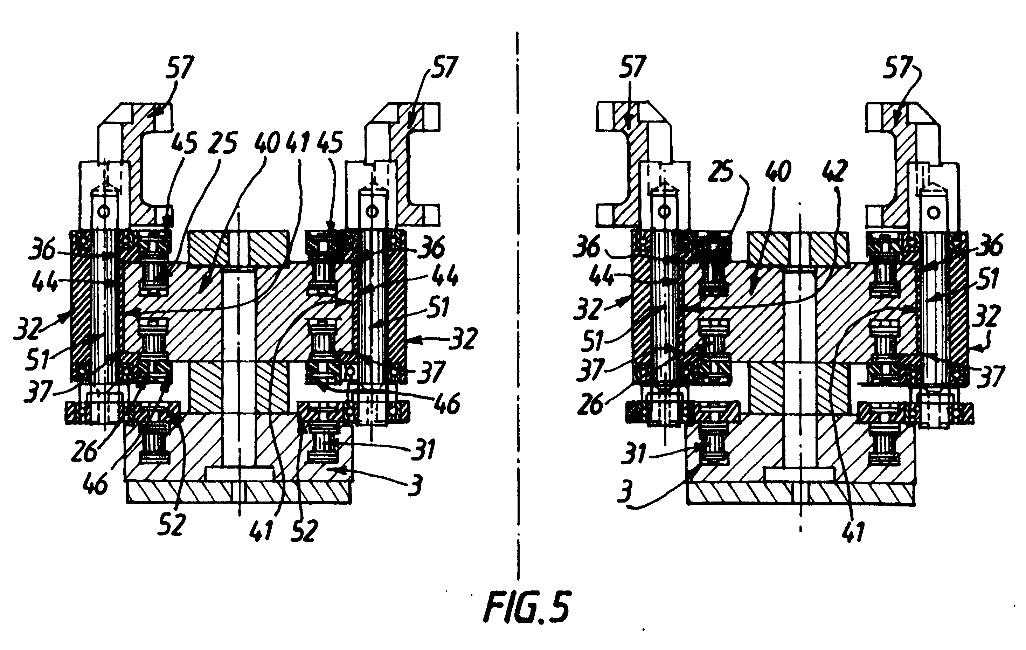

Le contact des chanfreins 36, 37 de la face interne 44 des supports 32 avec le bloc 40 a lieu essentiellement sur toute la longueur des sections rectilignes 46, 47 du circuit des supports 32 (voir figure 5).

La hauteur h de chaque support 32 est sensiblement supérieure à la distance d séparant la chaîne sans fin haute 25 de la chaîne sans fin basse 26.

Chaque support 32 est associé à la chaîne sans fin haute 25 par un mécanisme d'attache 45, éventuellement amovible.

Chaque support 32 est également associé à la chaîne sans fin basse 26 par un mécanisme d'attache, éventuellement amovible 45'.

Lors du mouvement des chaînes 25, 26 sur leur circuit déterminé par la tête de commande 24 et la tête de retour 30, la position des support 32 par rapport au bloc 40 et aux chaînes 25, 26 est maintenue constante.

Une bonne rigidité d'ensemble est obtenue par la forme des gorges 38, 39, le contact des chanfreins 36, 37 avec le bloc 40 ainsi qu'éventuellement par le contact entre la surface 44 des supports 32 et la surface 41 du bloc 40.

La trajectoire des supports 32 comprend deux sections sensiblement rectilignes 46, 47, symétriques par rapport au plan S1 et deux sections courbes 48, 49 reliant les sections rectilignes 46, 47 à leur extrémité.

Chaque support 32 est relié, à son extrémité inférieure, à un levier 50.

Ce levier 50 est mobile en rotation par rapport au support 32 autour d'un axe 51 sensiblement vertical.

Ce levier 50 est mobile en rotation par rapport à une plaque 52, autour d'un axe 53 sensiblement vertical.

Cette plaque 52 vient en butée contre un chanfrein 54 réalisé dans la partie supérieure périphérique de la partie centrale 7 du bâti 3.

Cette plaque 52 est également guidée par son contact avec un chanfrein 55 réalisé dans la partie supérieure périphérique de la paroi 5 du bâti 3.

De sorte que, lors du déplacement d'un support 32, entraîné par les chaînes 25, 26, la plaque 52, associée à la chaîne 31 elle-même entraînée en synchronisme avec les chaînes 25, 26, assure un guidage du support 32 et un maintien renforcé de la position de l'axe 51, en particulier lorsque les supports sont entraînés à grande vitesse.

Lors du mouvement en circuit fermé des supports 32, les leviers 50 associés restent toujours sensiblement parallèles aux sections droites 13, 14 de la gorge 4.

Les supports 32 comportent, à leur extrémité supérieure, une pièce d'accrochage 56 pour des empreintes 57 formant éléments d'espacement et de transfert d'articles en continu.

Les empreintes 57 sont des évidements réalisés dans une pièce en métal, en polymère ou autre matériau équivalent. Les empreintes 57 et leurs supports 56 sont solidaires de l'axe 51.

La longueur des leviers 50 est sensiblement identique à la distance L séparant les axes 17 et 21 d'une part ou 18 et 29 d'autre part.

Plus précisément, la distance séparant les axes 51, 53 de chaque levier 50 est sensiblement égale aux distances séparant les axes 17 et 21 d'une part et 18 et 29 d'autre part.

De sorte que les empreintes 57 restent toujours disposées selon la même direction, à savoir la direction de la flèche C du sens de convoyage, comme indiqué en figure 1.

Les empreintes 57 peuvent être amovibles, le cas échéant.

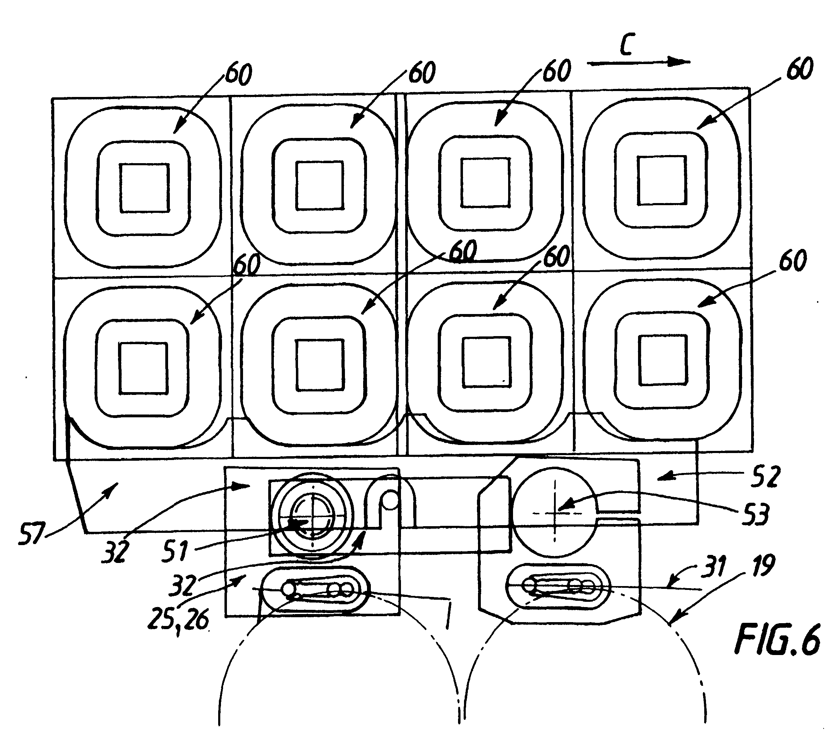

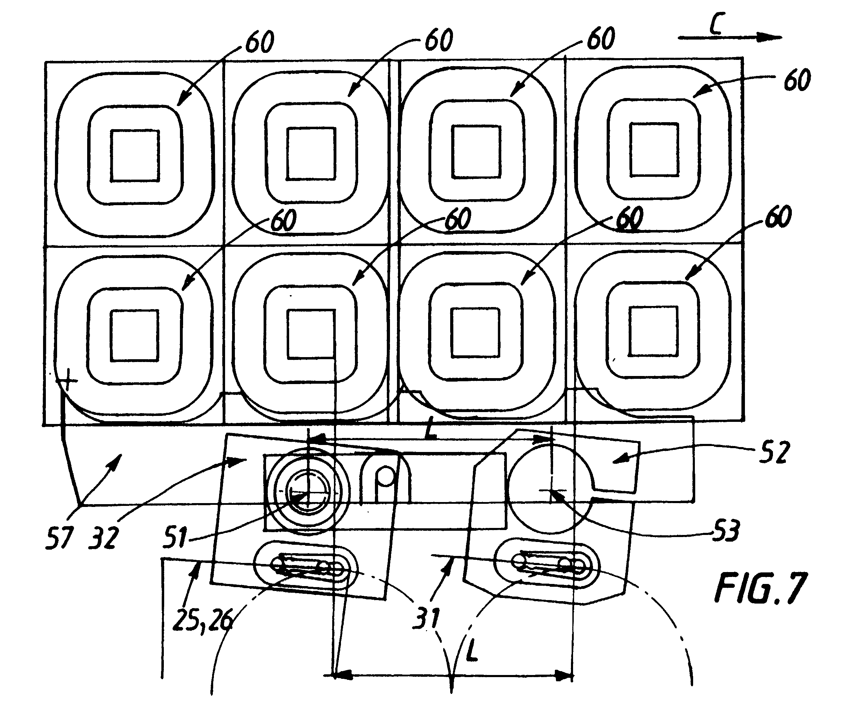

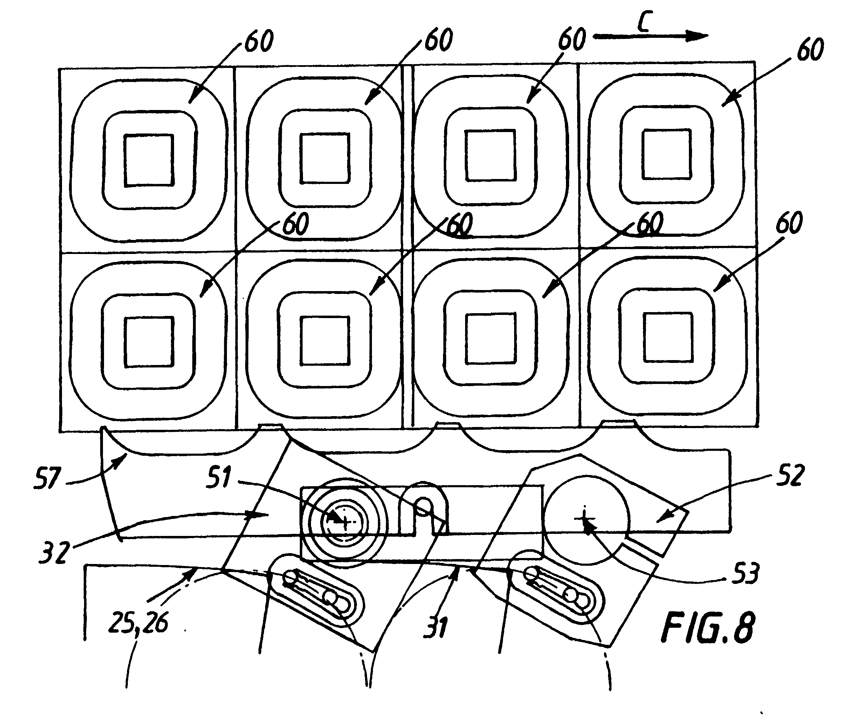

Sur les figures 6, 7 et 8 sont représentées trois étapes successives du dégagement d'une empreinte 57 par rapport à des produits 60 à grouper et transporter selon la direction C.

Sur les figures 6, 7 et 8, huit articles 60 tels que des pots en plastique ou équivalent sont transportés par un mécanisme 1 dont une partie seulement est représentée, à fin de clarté.

En modifiant la courbure de la gorge 4 de guidage de la chaîne 31, dans les parties extrêmes des sections droites 13, 14 correspondant respectivement à l'entrée dans la section courbe 15, 16, ainsi que la courbure des gorges 38, 39 des sections droites 46, 47 correspondant respectivement à l'entrée dans les sections courbes 48, 49, l'on modifie localement la cinétique des empreintes 57.

Le dégagement, respectivement l'engagement des empreintes sur les articles 60 peut ainsi être accéléré et facilité, dès lors que les courbures définies ci-dessus sont plus grandes que celles liées à un simple congé de raccordement entre les sections sensiblement rectilignes et les sections en arc de cercle des gorges 4, 38, 39.

Un mécanisme 1 peut être placé seul au sein d'une ligne d'emballage par exemple.

Ou bien, ainsi qu'il est représenté en figure 1, deux mécanismes identiques 1, 2 peuvent être placés en regard, les articles à grouper et à transporter étant alors guidés par les empreintes 57, placées en vis-à-vis, un dispositif, non représenté, assurant la commande de synchronisme des déplacements des chaînes de chacun des deux mécanismes 1, 2.

Un dispositif de transport et d'espacement selon l'invention présente de nombreux avantages par rapport aux dispositifs connus de l'art antérieur.

Le guidage des éléments d'espacement 57 est particulièrement précis, ce qui permet des cadences élevées et des déplacements rapides des éléments 57.

La forme, la taille des éléments d'espacement sont laissées au libre choix des utilisateurs.

Des éléments d'espacement très haut sont possibles, l'ensemble de guidage restant suffisamment rigide pour supporter le porte-à-faux des outillages 57.

Tout l'espace situé au-dessus d'un plan tangent au bord supérieur des outillages 57 est libre, ce qui laisse toutes les possibilités d'installer un outil au-dessus du mécanisme 1, 2, cet outil pouvant facilement entrer en contact avec les objets groupés et transportés par les mécanismes 1, 2.

## Revendications

1. Mécanisme de transfert et d'espacement en continu, ce mécanisme comportant une pluralité d'éléments (57) d'espacement et de transport, mobiles selon un circuit comprenant au moins une section sensiblement rectiligne (46, 47), ce mécanisme comprenant en outre un premier organe de guidage et d'entraînement tel qu'une chaîne sans fin haute (25), un deuxième organe de guidage et d'entraînement tel qu'une chaîne sans fin basse (26), chaque élément d'espacement et de transport (57) étant associé aux premier et deuxième organes (25, 26) de guidage et d'entraînement par l'intermédiaire de supports (32), ce mécanisme étant **caractérisé en ce qu'**il comporte un troisième organe de guidage et d'entraînement (31) tel qu'une chaîne sans fin, chaque élément de transport et d'espacement (57) étant associé au troisième organe de guidage et d'entraînement par l'intermédiaire d'un levier (50) chaque support (32) comportant une partie centrale (33) et deux parties extrêmes opposées (34, 35), la face interne (44) et des chanfreins (36, 37) du support (32) étant sensiblement en contact avec un bloc de guidage (40) comportant des gorges (38, 39) dans lesquelles sont logés les moyens de guidage et d'entraînement (25, 26).

2. Mécanisme de transfert et d'espacement selon la revendication 1, **caractérisé en ce que** chaque levier (50) est monté mobile en rotation par rapport au troisième organe de guidage (31) selon un axe (53) sensiblement vertical et situé à une première partie extrême du levier (50), le levier (50) étant en outre monté mobile en rotation selon un axe sensiblement vertical (51) de chaque support (32) associé, cet axe (51) étant situé à la secondé partie extrême du levier (50).

3. Mécanisme selon la revendication 1 ou 2, **caractérisé en ce que** le premier et le deuxième organe de guidage et d'entraînement sont des chaînes ou des bandes sans fin (25, 26), placées en regard et l'une au-dessus de l'autre entre une tête de commande (24) comportant une poulie de renvoi (22) de la chaîne sans fin haute (25) coaxiale à une poulie de renvoi (23) de la chaîne sans fin basse (26), la tête de retour (30) comportant une poulie de renvoi (27) de la chaîne sans fin haute (25) coaxiale à une poulie de renvoi (28) de la chaîne sans fin basse (26).

4. Mécanisme selon l'une quelconque des revendications 1 à 3, **caractérisé en ce que** le troisième organe de guidage et d'entraînement (31) est une chaîne ou une bande sans fin placée en regard et au dessous des premier et deuxième organe de guidage et d'entraînement, entre deux poulies de renvoi (19,20) d'axe sensiblement verticaux.

5. Mécanisme selon l'une quelconque des revendications 3 à 4, **caractérisé en ce que** l'axe (29) de la tête de retour (30) est écarté d'une distance L de l'axe (18) d'une première poulie de renvoi (20) du troisième organe de guidage et d'entraînement (31), cette distance L étant égale à la distance séparant l'axe (21) de la tête de commande (24) avec l'axe (17) de la seconde poulie de renvoi (19) du troisième organe de guidage et d'entraînement (31).

6. Mécanisme selon la revendication 5, **caractérisé en ce que** la distance L est sensiblement égale à la distance séparant les axes (51,52) de rotation du levier (50).

7. Mécanisme selon l'une quelconque des revendications 3 à 6, **caractérisé en ce que** les chaînes sans fin haute et basse (25,26) définissent un circuit de déplacement des supports (32) comprenant deux sections sensiblement rectilignes et parallèles (46,47) et deux sections extrêmes latérales courbes (48,49).

8. Mécanisme selon l'une quelconque des revendications 4 à 7, **caractérisé en ce que** la chaîne sans fin (31) formant troisième organe de guidage et d'entraînement est comprise dans une gorge (4) du bâti (3) du mécanisme (1,2), cette gorge (4) comprenant deux sections sensiblement rectilignes et parallèles (13,14) et deux sections extrêmes latérales courbes (15,16).

9. Mécanisme selon l'une des revendications 1 à 8, **caractérisé en ce que** le bloc de guidage est réalisé en polyamide haute densité ou tout autre polymère résistant à l'usure par frottement, facilement usinable et présentant une absorption d'humidité faible et de faibles coefficients de dilatation en atmosphère humide.

10. Mécanisme selon l'une quelconque des revendications 8 à 9, **caractérisé en ce que** le rayon de courbure des gorges (4, 38, 39) du côté entrée et du côté sortie du mécanisme est supérieur au rayon de courbure d'un simple congé de raccordement, entre les sections sensiblement rectilignes (13, 14, 46, 47) et les sections en arc de cercle (15, 16, 48, 49) des gorges (4, 38, 39) de chacune des trois chaînes (25, 26, 31) de sorte que le dégagement des empreintes (57) est facilité en sortie du mécanisme (1, 2).

## Patentansprüche

1. Transfer- und Abstandsmechanismus im Dauerbetrieb, wobei dieser Mechanismus eine Mehrzahl von Abstands- und Transportelementen (57) umfasst, die entsprechend einem Kreislauf mit mindestens einem etwa geradlinigen Abschnitt (46, 47) mobil sind, wobei dieser Mechanismus ferner ein erstes Führungs- und Antriebsorgan wie eine obere Endloskette (25), ein zweites Führungs- und Antriebsorgan wie eine untere Endloskette (26) umfasst, wobei jedes Abstands- und Transportelement (57) über Träger (32) dem ersten und zweiten Führungs- und Antriebsorgan (25, 26) beigeordnet ist, wobei dieser Mechanismus **dadurch gekennzeichnet ist, dass** er ein drittes Führungs- und Abstandsorgan (31) wie eine Endloskette umfasst, wobei jedes Transport- und Abstandselement (57) über einen Hebel (50) dem dritten Führungs- und Antriebsorgan beigeordnet ist, wobei jeder Träger (32) ein Mittelteil (33) und zwei gegenüberliegende Endteile (34, 35) umfasst, wobei die Innenseite (44) und Schrägungen (36, 37) des Trägers etwa in Kontakt mit einem Führungsblock (40) stehen, der Hälse (38, 39) aufweist, in denen die Führungs- und Antriebsmittel (25, 26) gelagert sind.

2. Transfer- und Abstandsmechanismus nach Anspruch 1, **dadurch gekennzeichnet, dass** jeder Hebel (50) in Bezug auf das dritte Führungsorgan (31) drehbar um eine etwa vertikale und an einem ersten Endteil des Hebels (50) angeordnete Achse (53) montiert ist, wobei der Hebel (50) ferner drehbar um eine etwa vertikale Achse (51) jedes der beigeordneten Träger (32) montiert ist, wobei diese Achse (51) am zweiten Endteil des Hebels (50) angeordnet ist.

3. Mechanismus nach Anspruch 1 oder 2, **dadurch gekennzeichnet, dass** das erste und zweite Führungs- und Antriebsorgan Endlosketten bzw. -bänder (25, 26) sind, die sich gegenüberliegend und übereinander zwischen einem Steuerkopf (24) angeordnet sind, der eine Umlenkrolle (22) der oberen Endloskette (25) koaxial zu einer Umlenkrolle (23) der unteren Endloskette (26) umfasst, wobei der Rücklaufkopf (30) eine Umlenkrolle (27) der oberen Endloskette (25) koaxial zu einer Umlenkrolle (28) der unteren Endloskette (26) aufweist.

4. Mechanismus nach einem der Ansprüche 1 bis 3, **dadurch gekennzeichnet, dass** das dritte Führungs- und Antriebsorgan (31) eine Endloskette bzw. ein Endlosband ist, die bzw. das gegenüber und unter dem ersten und zweiten Führungs- und Antriebsorgan, zwischen zwei Umlenkrollen (19, 20) mit etwa vertikaler Achse angeordnet ist.

5. Mechanismus nach einem der Ansprüche 3 bis 4, **dadurch gekennzeichnet, dass** die Achse (29) des Rücklaufkopfs (30) um einen Abstand L von der Achse (18) einer ersten Umlenkrolle (20) des dritten Führungs- und Antriebsorgans (31) entfernt ist, wobei dieser Abstand L gleich dem Abstand ist, der die Achse (21) des Steuerkopfs (24) von der Achse (17) der zweiten Umlenkrolle (19) des dritten Führungs- und Antriebsorgans (31) trennt.

6. Mechanismus nach Anspruch 5, **dadurch gekennzeichnet, dass** der Abstand L etwa dem Abstand entspricht, der die Rotationsachsen (51, 52) vom Hebel (50) trennt.

7. Mechanismus nach einem der Ansprüche 3 bis 6, **dadurch gekennzeichnet, dass** die obere und unter Endloskette (25, 26) einen Bewegungskreislauf der Träger (32) definieren, der zwei etwa geradlinige und parallele Abschnitte (46, 47) und zwei gekrümmte seitliche Endabschnitte (48, 49) umfasst.

8. Mechanismus nach einem der Ansprüche 4 bis 7, **dadurch gekennzeichnet, dass** die Endloskette (31) in Form des dritten Führungs- und Antriebsorgans ist einem Hals (4) des Grundgestells (3) des Mechanismus (1, 2) verläuft, wobei dieser Hals (4) zwei etwa geradlinige und parallele Abschnitte (13, 14) und zwei gekrümmte seitliche Endabschnitte (15, 16) umfasst.

9. Mechanismus nach einem der Ansprüche 1 bis 8, **dadurch gekennzeichnet, dass** der Führungsblock aus hochdichtem Polyamid oder einem beliebigen anderen Polymer besteht, das reibungsverschleißfest und leicht zu bearbeiten ist sowie eine geringe Feuchte-Absorption und geringe Dehnungskoeffizienten in feuchter Atmosphäre aufweist.

10. Mechanismus nach einem der Ansprüche 8 und 9, **dadurch gekennzeichnet, dass** der Krümmungsradius der Hälse (4, 38, 39) auf der Eingangs- und der Ausgangsseite des Mechanismus größer ist als der Krümmungsradius einer einfachen Anschlusskehle, zwischen den etwa geradlinigen Abschnitten (13, 14, 46, 47) und den kreisbogenförmigen Abschnitten (15, 16, 48, 49) der Hälse (4, 38, 39) jeder der drei Ketten (25, 26, 31), so dass das Auslösen der Abdrücke (57) am Ausgang des Mechanismus (1, 2) vereinfacht wird.

## Claims

1. A mechanism for continuous transfer and spacing, said mechanism comprising a plurality of spacing and transport elements (57), movable according to a circuit comprising at least one substantially rectilinear section (46, 47), said mechanism also comprising a first guidance and driving member such as an upper endless chain (25), a second guidance and driving member such as a lower endless chain (26), each spacing and transport element (57) being associated with the first and second guidance and driving members (25, 26) by means of supports (32), said mechanism being **characterised in that** it comprises a third guidance and driving member (31) such as an endless chain, each transport and spacing element (57) being associated with the third guidance and driving member by means of a lever (50), each support (32) comprising a central part (33) and two opposite end parts (34, 35), the internal face (44) and chamfers (36, 37) of the support being substantially in contact with a guidance block (40) comprising grooves (38, 39) in which the guidance and driving means (25, 26) are accommodated.

2. A transfer and spacing mechanism according to Claim 1, **characterised in that** each lever (50) is mounted movable rotationally with respect to the third guidance member (31) according to a substantially vertical axis (53) situated at a first end part of the lever (50), the lever (50) also being mounted movable rotationally according to a substantially vertical axis (51) of each associated support (32), said axis (51) being situated at the second end part of the lever (50).

3. A mechanism according to Claim 1 or 2, **characterised in that** the first and second guidance and driving members are endless chains or belts (25, 26), placed opposite and one above the other between a control head (24) comprising a return pulley (22) for the upper endless chain (25) coaxial with a return pulley (23) for the lower endless chain (26), the return head (30) comprising a return pulley (27) for the upper endless chain (25) coaxial with a return pulley (28) for the lower endless chain (26).

4. A mechanism according to any one of Claims 1 to 3, **characterised in that** the third guidance and driving member (31) is an endless chain or belt placed opposite and below the first and second guidance and driving members, between two return pulleys (19, 20) with substantially vertical axes.

5. A mechanism according to any one of Claims 3 to 4, **characterised in that** the axis (29) of the return head (30) is a distance L away from the axis (18) of a first return pulley (20) of the third guidance and driving member (31), this distance L being equal to the distance separating the axis (21) of the control head (24) and the axis (17) of the second return pulley (19) of the third guidance and driving member (31).

6. A mechanism according to Claim 5, **characterised in that** the distance L is substantially equal to the distance separating the axes (51, 52) of rotation of the lever (50).

7. A mechanism according to any one of Claims 3 to 6, **characterised in that** the upper and lower endless chains (25, 26) define a circuit of movement of the supports (32) comprising two substantially rectilinear and parallel sections (46, 47) and two curved lateral end sections (48, 49).

8. A mechanism according to any one of Claims 4 to 7, **characterised in that** the endless chain (31) forming the third guidance and driving member is contained within a groove (4) in the frame (3) of the mechanism (1, 2), this groove (4) comprising two substantially rectilinear and parallel sections (13, 14) and two curved lateral end sections (15, 16).

9. A mechanism according to one of Claims 1 to 8, **characterised in that** the guidance block is produced from high-density polyamide or any other polymer resistant to wear by friction, able to be machined easily and having a low moisture absorption and small coefficients of expansion in a damp atmosphere.

10. A mechanism according to either one of Claims 8 and 9, **characterised in that** the radius of curvature of the grooves (4, 38, 39) on the input side and the output side of the mechanism is greater than the radius of curvature of a single connecting fillet, between the substantially rectilinear sections (13, 14, 46, 47) and the sections in an arc of a circle (15, 16, 48, 49) of the grooves (4, 38, 39) of each of the three chains (25, 26, 31) so that the release of the moulds (57) is facilitated at the output of the mechanism (1, 2).
